# EUROPÄISCHE PATENTSCHRIFT

(11) **EP 0 425 939 B1**
(45) Veröffentlichungstag und Bekanntmachung des Hinweises auf die Patenterteilung: **19.01.1994**
(21) Anmeldenummer: 90120097.2
(22) Anmeldetag: 19.10.1990
(51) Int. Cl.: H01M 8/24, H01M 8/02

(54) **Festelektrolyt-Hochtemperatur-Brennstoffzellenmodul**
Solid electrolyte high-temperature fuelcell module
Modules de cellules à combustible à électrolyte solide et fonctionnant à haute température

(30) Priorität: 26.10.1989 DE 3935722; 21.03.1990 DE 4009138
(43) Veröffentlichungstag der Anmeldung: 08.05.1991
(73) Patentinhaber: SIEMENS AKTIENGESELLSCHAFT, 80333 München (DE)
(72) Erfinder: Greiner, Horst, Dipl.-Ing., W-8520 Erlangen (DE); Ivers-Tiffée, Ellen, Dr., W-8000 München 60 (DE); Wersing, Wolfram, Dipl.-Phys., W-8011 Kirchheim (DE)

(56) Entgegenhaltungen:
- EP-A- 0 357 025
- WO-A-86/06762
- CH-A- 490 742
- DE-A- 4 004 271
- FR-A- 1 534 093
- US-A- 3 300 344
- US-A- 3 526 549
- US-A- 4 753 857
- PATENT ABSTRACTS OF JAPAN, Band 11, Nr. 292 (E-543)[2739], 19. September 1987;& JP-A-62 90 871 (HITACHI LTD) 25-04-1987
- PATENT ABSTRACTS OF JAPAN, Band 11, Nr. 275 (E-537)[2722], 5. September 1987;& JP-A-62 76 260 (ISHIKAWAJIMA HARIMA HEAVY IND.) 08-04-1987
- PROCEEDINGS OF THE 24TH INTERSOCIETY ENERGY CONVERSION ENGINEERING CONFERENCE,IECEC'89, Washington, DC, 6. - 11. August 1989, Band 3, Seiten 1547-1551; M.DOKIYA et al.: "Fabrication of a planar solid oxide fuel cell"

## Beschreibung

Die Erfindung bezieht sich auf ein Festelektrolyt-Hochtemperatur-Brennstoffzellenmodul, welches mehrere in Serie geschaltete, plane fest aufeinanderliegende Festelektrolyt-Hochtemperatur-Brennstoffzellen umfaßt. Hierbei sind zwischen unmittelbar benachbarten, in Serie geschalteten Zellen je eine bipolare Platte eingebaut, die die Kathode der einen Zelle mit der Anode der dieser benachbarten Zelle elektrisch leitend verbindet, die Gasverteilung mittels beidseitig eingelassener offener Kanäle sicherstellt und ein tragendes Strukturelement darstellt. Die bipolaren Platten weisen im Randbereich Durchbrüche auf, die entweder mit den Kanälen der einen Seite oder mit den Kanälen der anderen Seite der bipolaren Platte kommunizieren. Zwischen einander benachbarten bipolaren Platten ist je ein Festelektrolyt-Element eingelegt, welches auf der einen Seite mit Kathodenmaterial und auf der anderen Seite mit Anodenmaterial beschichtet ist. Diese Festelektrolyt-Elemente weisen im Randbereich eigene mit den Durchbrüchen der bipolaren Platten deckungsgleiche Durchbrüche auf.

Solche Serienschaltungen sind beispielsweise in der vorveröffentlichten WO 86/06762 und in der nachveröffentlichten EP 0357025, in der die Vertragsstaaten DE, FR, GB und NL benannt wurden, ausgeführt worden.

In der Brennstoffzelle läuft ein Prozeß ab, der im wesentlichen eine Umkehrung der Elektrolyse darstellt. Die Reaktionspartner der Verbrennungsreaktion, der Brennstoff und der Sauerstoffträger, im allgemeinen Luft, werden in getrennten Kammern zugeführt, wobei die Brennstoff und Sauerstoff führenden Kammern durch einen keramischen Festelektrolyten, der auf beiden Seiten mit Elektroden versehen ist, voneinander getrennt sind. Im Betrieb werden an der brennstoffseitigen Elektrode des Festelektrolyten Elektronen abgegeben und an der sauerstoffseitigen Elektrode des Festelektrolyten Elektronen aufgenommen. An den beiden Elektroden des Festelektrolyten stellt sich eine Potentialdifferenz, die Leerlaufspannung, ein. Der Festelektrolyt hat die Funktion, die Reaktanten zu trennen, die Ladungen in Form von Ionen zu überführen und zugleich einen Elektronen-Kurzschluß zwischen den beiden Elektroden des Festelektrolyten zu verhindern. Hierzu muß er eine niedrige Leitfähigkeit für Elektronen und zugleich eine hohe Leitfähigkeit für Ionen aufweisen.

Solche Festelektrolyt-Hochtemperatur-Brennstoffzellen eignen sich infolge der relativ hohen Betriebstemperaturen - sie liegen im Bereich von 800° C bis 1100 °C - im Gegensatz zu Niedertemperaturbrennstoffzellen dazu, außer Wasserstoffgas auch Kohlenwasserstoffe, wie z. B. Erdgas oder flüssig speicherbares Propan, umzusetzen. Wird Kohlendioxid oder Wasserdampf zum Brennstoff zugesetzt, so kann bei den hohen Temperaturen infolge Konvertierung des Brennstoffes jede Rußbildung vermieden werden. Mit Festelektrolyt-Hochtemperatur-Brennstoffzellen sind hohe Leistungsdichten erreichbar, die größenordnungsmäßig im Bereich von mehreren 100 Milliwatt pro cm² liegen. Die einzelne Hochtemperatur-Brennstoffzelle erzeugt eine Leerlaufspannung von etwas über 1 V. Höhere Spannungen erfordern die Serienschaltung mehrerer Einzelzellen. Weitere Einzelheiten zum Stand der Technik sind in dem "Fuel cell handbook" von Appleby and Foulkes, New York, 1989, zu entnehmen.

Beim Betrieb eines Hochtemperaturbrennstoffzellenmoduls gemäß dem vorstehend ausgeführten Stand der Technik zeigten sich teilweise bereits nach wenigen Stunden des Probebetriebs Undichtigkeiten zwischen den Bauelementen des Moduls, so daß im schlimmsten Fall große Bereiche des Moduls durch die Abreaktion von Brenngas und Sauerstoff fortschreitend beschädigt wurden.

Der Erfindung liegt daher die Aufgabe zugrunde, ein Festelektrolyt-Hochtemperatur-Brennstoffzellenmodul - auch Festelektrolyt-Hochtemperatur-Brennstoffzellenstack genannt - zu entwickeln, welches sich in einfacher Weise aus einer Vielzahl von Einzelzellen zusammensetzen läßt, minimale elektrische Innenwiderstände aufweist und zugleich mechanisch hinreichend stabil ist. Dabei sollte sich das Festelektrolyt-Hochtemperatur-Brennstoffzellenmodul bei den herrschenden Betriebstemperaturen durch hohe Gasdichtigkeit und möglichst einfache und zuverlässige Anschlüsse für den Brennstoff und den Sauerstoffträger auszeichnen.

Diese Aufgabe wird erfindungsgemäß dadurch gelöst, daß die Festelektrolyt-Elemente an den Rändern Dichtflächen haben und an diesen Dichtflächen beidseitig der Festelektrolytzwischen diesen und den bipolaren Platten als weitere Dichtflächen sogenannte Fensterfolien aus elektrisch gut leitendem Material eingesetzt sind, welche im Randbereich mit den Durchbrüchen der bipolaren Platten deckungsgleiche eigene Durchbrüche und gegenüber den Kanälen der bipolaren Platten Fensterdurchbrüche aufweisen.

Solche Fensterfolien brauchen außer der elektrischen Leitfähigkeit nur eine Dichtfunktion zu übernehmen und können hinsichtlich des gewählten Materials ganz an diese Funk-Dichtflächen der Elektrolyt-Elemente wird ein besonders gasdichter und damit auf lange Sicht betriebssicherer Aufbau eines Hochtemperaturbennstoffzellen-Moduls erreicht. Außerdem erspart dieser Aufbau ein Gehäuse, weil die Transportwege für den Brennstoff und den Sauerstoffträger besonders gasdicht in einen Verbund aus bipolaren Platten, Festelektrolyt-Elementen und Fensterfolien integriert sind.

Die Stabilität der einzelnen Zellen läßt sich verbessern, wenn in besonders vorteilhafter Ausgestaltung der Erfindung die über den Kanälen der bipolaren Platte befindlichen Fensterdurchbrüche der Fensterfolie von Stützstegen unterbrochen sind. Solche Stützstege verhindern, daß die Festelektrolyt-Platten infolge unterschiedlichen thermischen Ausdehnungskoeffizienten gegenüber dem Material der bipolaren Platte bzw. der Fensterfolie beim Abkühlen des Brennstoffzellenmoduls durchhängen. Dieses könnte dann zur Zerstörung der Festelektrolytplatte führen. Außerdem wird dadurch auch die Kontaktfläche vergrößert.

Die mechanische Stabilität und Gasdichtigkeit des Brennstoffzellenmoduls werden gleichermaßen verbessert, wenn in zweckmäßiger Weiterbildung der Erfindung die Fensterfolie und die jeweils unmittelbar anliegende bipolare Platte um die Durchbrüche herum und an ihrem äußeren Umfang gasdicht miteinander verschweißt sind. Zugleich wird dadurch auch der elektrische Kontaktwiderstand in zuverlässiger Weise minimiert.

In besonders zweckmäßiger Ausgestaltung der Erfindung können die Festelektrolyt-Elemente nur im Bereich jener den Fensterdurchbrüchen in der Fensterfolie gegenüberliegenden Flächenelementen mit Kathoden- bzw. mit Anodenmaterial beschichtet sein. Dies ermöglicht es, kleinere Kathoden- und Anodenflächen zu haben, bzw. entsprechend kleine keramische Festelektrolytplatten zu verwenden, so daß sich Unterschiede im Wärmeausdehnungskoeffizienten nicht so stark auswirken können.

Es ist bereits vorgeschlagen worden, die Festelektrolyt-Platten bei solchen Festelektrolyt-Hochtemperatur-Brennstoffzellen aus Yttrium stabilisiertem Zirkonoxid zu fertigen. Der besonderen Eignung dieses Materials für den genannten Zweck steht seine Sprödigkeit gegenüber. So führen Unterschiede im thermischen Ausdehnungskoeffizient zwischen dem Festelektrolyt aus Yttrium stabilisiertem Zirkonoxid und der anliegenden metallischen Fensterfolie häufig zu Rissen und Brüchen in der Festelektrolyt-Platte. Man hat bereits versucht, diesem Umstand durch Verwendung von plastischen Lotschichten Rechnung zu tragen. Diese Maßnahme konnte die bestehenden Schwierigkeiten zwar mildern, jedoch nicht beheben. Um das Reißen und Brechen der Festelektrolyt-Platte im Betrieb zu verhindern, kann daher in besonders zweckmäßiger Weiterbildung der Erfindung für die bipolare Platte und die Fensterfolie eine metallische Legierung verwendet werden, dessen Ausdehnungskoeffizient gleich demjenigen der Festelektrolyt-Platte ist. Auf diese Weise werden bei an der bipolaren Platte unmittelbar anliegender Festelektrolyt-Platten beim Aufheizen bzw. Abkühlen mechanische Spannungen von der Festelektrolyt-Platte ferngehalten.

Darüber hinaus kann zur Verringerung der mechanischen Belastungen der Festelektrolyt-Platte vorgesehen sein, in einem Festelektrolyt-Element nebeneinander mehrere separate, auf der einen Seite mit Kathodenmaterial und auf der anderen Seite mit Anodenmaterial beschichtete Festelektrolyt-Platten anzuordnen.

In Weiterbildung der Erfindung kann für die Fensterfolie eine metallische Legierung verwendet werden, deren Ausdehnungskoeffizient gleich demjenigen der Festelektrolyt-Platte ist. So werden bei an der Festelektrolyt-Platte unmittelbar anliegender Fensterfolie bei Änderungen der Temperatur mechanische Spannungen von der Festelektrolyt-Platte ferngehalten.

In besonders vorteilhafter Weiterbildung der Erfindung kann als metallische Legierung eine Chrom-Nickel-Legierung mit 5 bis 15 Gew.-% Nickel verwendet werden. Eine solche Legierung hat nahezu den gleichen Ausdehnungskoeffizient wie eine Yttrium stabilisierte Zirkonoxid-Festelektrolyt-Platte.

In Weiterbildung der Erfindung haben sich der Chrom-Nickel-Legierung in Spuren beigemischte seltene Erdenmetalle als besonders geeignet für die Verbesserung der Korrosionsbeständigkeit bei den vorherrschenden Betriebsbedingungen erwiesen.

In einer anderen besonders vorteilhaften Weiterbildung der Erfindung kann als metallische Legierung eine Eisen-Chrom-Aluminium-Legierung, wie zum Beispiel MA 956 mit Gehalten von 5 bis 15 Gew.-% Molybdän und/oder 5 bis 15 Gew.-% Wolfram, verwendet werden.

Weitere vorteilhafte Ausgestaltungen der Erfindung sind den übrigen Unteransprüchen zu entnehmen.

Weitere Einzelheiten der Erfindung werden anhand zweier in den Figuren dargestellter Ausführungsbeispiele erläutert. Es zeigen:
- FIG 1: eine schaubildliche Ansicht eines nach dem Kreuzstromprinzip aufgebauten Festelektrolyt-Hochtemperatur-Brennstoffzellenmoduls,
- FIG 2: eine Aufsicht auf eine bipolare Platte des Brennstoffzellenmoduls der Figur 1,
- FIG 3: einen Schnitt längs der Linie III-III der Figur 2,
- FIG 4: eine Aufsicht auf ein Festelektrolyt-Element des Brennstoffzellenmoduls der Figur 1,
- FIG 5: einen Querschnitt längs der Linie V-V der Figur 4,
- FIG 6: eine Aufsicht auf eine Fensterfolie des Brennstoffzellenmoduls der Figur 1,
- FIG 7: eine schaubildliche Ansicht eines nach dem Parallelstromprinzip aufgebauten Festelektrolyt-Hochtemperatur-Brennstoffzellenmoduls,
- FIG 8: eine Aufsicht auf eine bipolare Platte des Brennstoffzellenmoduls der Figur 7,
- FIG 9: einen Querschnitt längs der Linie IX-IX der Figur 8,
- FIG 10: eine Aufsicht auf ein Festelektrolyt-Element des Brennstoffzellenmoduls der Figur 7,
- FIG 11: einen Querschnitt längs der Linie XI-XI der Figur 10 und
- FIG 12: eine Fensterfolie des Brennstoffzellenmoduls der Figur 7.

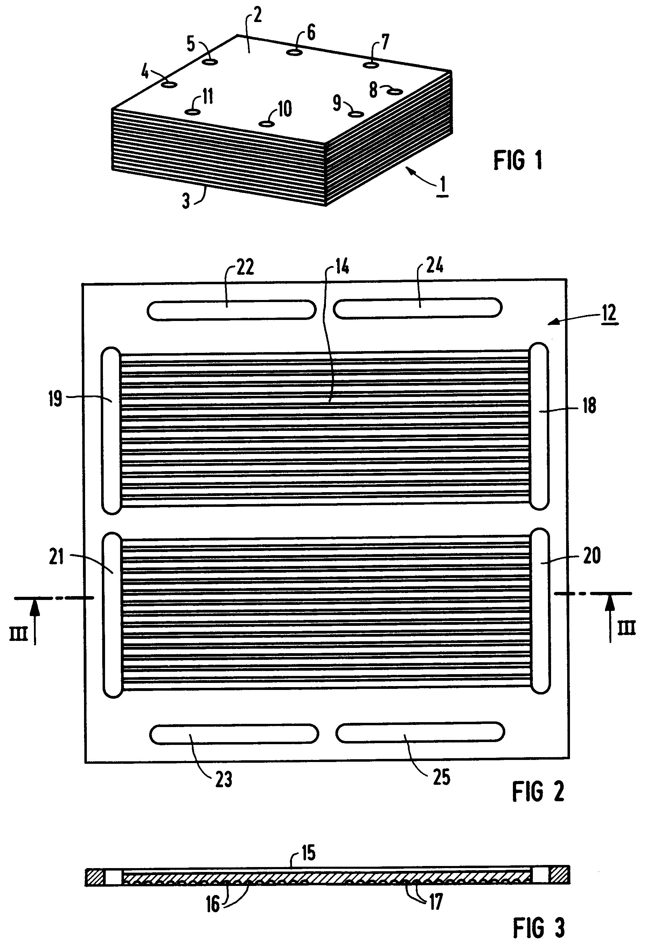

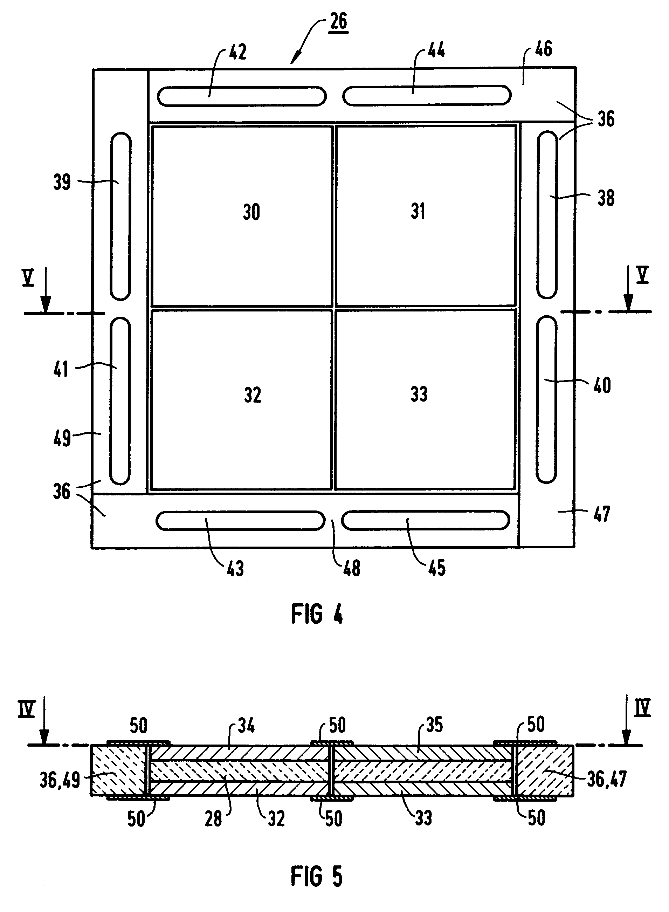

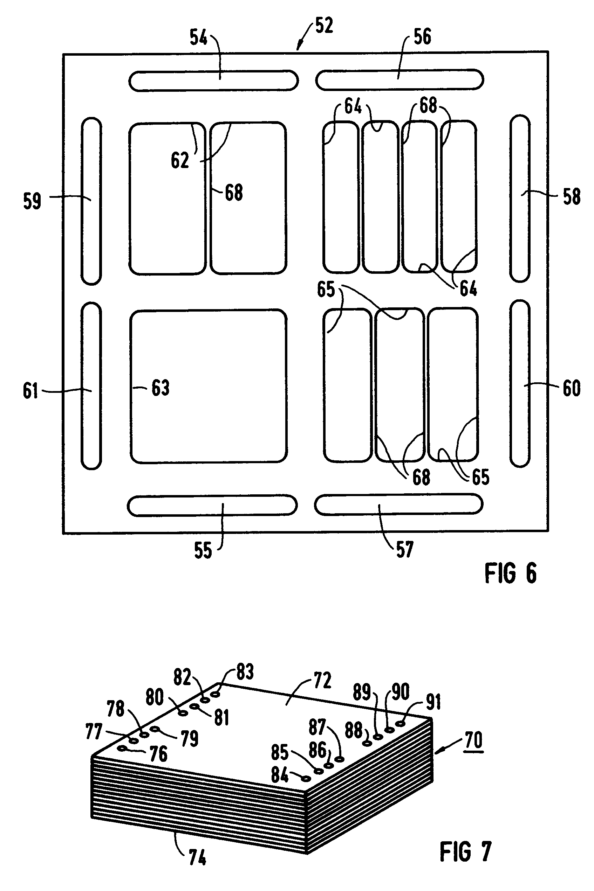

Anhand der schaubildlichen Ansicht der Figur 1 erkennt man, daß das Festelektrolyt-Hochtemperatur-Brennstoffzellenmodul aus einer Vielzahl von rechteckigen, im Ausführungsbeispiel quadratischen, plattenförmigen Elementen besteht, die aufeinandergestapelt sind und deren oberste und unterste Platte - eine sogenannte bipolare Deckplatte 2, 3 - im Randbereich acht kreisrunde Durchgangslöcher 4, 5, 6, 7, 8, 9, 10 zur Einspeisung von Brennstoff bzw. Brenngas und Luft bzw. Sauerstoff trägt. In dem in der Figur 1 dargestellten Festelektrolyt-Hochtemperatur-Brennstoffzellenmoduls 1 liegen unter der oberen bipolaren Deckplatte 2 der Reihenfolge nach eine in der Figur 6 dargestellte Fensterfolie, ein in den Figuren 4 und 5 dargestelltes Festelektrolyt-Element, eine weitere Fensterfolie, eine in den Figuren 2 und 3 dargestellte bipolare Platte, eine weitere Fensterfolie, ein weiteres Festelektrolyt-Element, eine weitere Fensterfolie, eine weitere bipolare Platte usw. aufeinander. Dabei bilden jeweils ein zwischen zwei benachbarten bipolaren Platten liegendes Festelektrolyt-Element einschließlich der beidseitig am Festelektrolyt-Element unmittelbar anliegenden Fensterfolien und der an den Fensterfolien anliegenden Seiten jeder der beiden bipolaren Platten zusammen eine Festelektrolyt-Hochtemperatur-Brennstoffzelle.

Die Figur 2 zeigt in einer Aufsicht den Aufbau einer nach dem Kreuzstromprinzip aufgebauten bipolaren Platte 12. Diese ist einteilig ausgeführt und besteht aus einem elektrisch gut leitendem metallischen Werkstoff. Dieser kann an sich eine Eisen-Nickel-Chrom-Legierung (wie z. B. AC66) oder eine Nickel-Chrom-Aluminium-Yttrium-Legierung (wie z. B. Alloy 214) oder eine Nickel-Chrom-Wolfram-Kobalt-Eisen-Legierung (wie z. B. Alloy 230) oder eine Eisenchrom-Aluminium-Legierung (wie z. B. ODS-Legierung MA 956) sein. Wegen der besseren Anpassung der Ausdehnungskoeffizienten der bipolaren Platte an die der Festelektrolyt-Platten empfiehlt es sich jedoch, bei der bipolaren Platte die Eisen-Chrom-Aluminium-Legierung (wie z. B. MA 956) mit Gehalten von 5 bis 15 Gew. -% Molybdän und/oder 5 bis 15 Gew. -% Wolfram oder gegebenenfalls auch eine Chrom-Nickel-Legierung mit einem Nickelgehalt von 5 bis 15 Gew. -% Nickel und Seltenen Erdenmetallen als Spurenelemente zu verwenden.

Die bipolare Platte 12 enthält auf jeder ihrer beiden Seiten zwei zueinander parallele, mit Ausnahme eines Randbereichs nahezu die gesamte Fläche der bipolaren Platte überdeckende Rillenfelder 14, 15, 16, 17 mit unmittelbar aneinanderliegenden parallelen Rillen. Diese münden an ihren beiden Enden in je einen schlitzförmigen Durchbruch 18, 19, 20, 21, 22, 23, 24, 25 im Randbereich der bipolaren Platte 12. Auch die andere Seite der bipolaren Platte ist genauso aufgebaut wie die abgebildete Seite mit dem einzigen Unterschied, daß dort die Rillenfelder 16, 17 um 90° gegenüber den Rillenfeldern 14, 15 auf der abgebildeten Seite verdreht sind und daher in den seitlich der Rillenfelder 14, 15 befindlichen schlitzförmigen Durchbrüchen 22, 24, 23, 25 münden. Dies wird auch aus der Schnittdarstellung in der Figur 3 deutlich, bei der auf der Oberseite eine Rille in Längsrichtung geschnitten ist und auf der Unterseite die Rillen der beiden Rillenfelder 16, 17 in Querrichtung geschnitten sind.

Nur die beiden als obere und untere Deckplatte des Festelektrolyt-Hochtemperatur-Brennstoffzellenmoduls 1 dienenden bipolaren Platten 2, 3 tragen auf ihren jeweiligen Außenseiten keine Rillen. Auch sind bei ihnen die schlitzförmigen Durchbrüche nicht durchgefräßt, sondern nur auf der Seite mit den Rillen bis zur Tiefe der Rillen eingesenkt. Im Bereich dieser schlitzförmigen Einsenkungen ist im Ausführungsbeispiel nur je ein Durchgangsloch 4, 5, 6, 7, 8, 9, 10, 11 vorgesehen, über das von außen die jeweiligen Leitungen (nicht dargestellt) für den Brennstoff bzw. den Sauerstoffträger anschließbar sind.

Die Figur 4 zeigt eine Aufsicht auf ein Festelektrolyt-Element 26 des in der Figur 1 gezeigten Brennstoffzellenmoduls 1. Man erkennt aus dieser Aufsicht und aus dem in der Figur 5 gezeigten Schnitt, daß dieses vier rechteckige Festelektrolytplatten 28, sowie beidseitig auf diesen Festelektrolyt-Platten aufgebrachte Elektroden 30, 31, 32, 33, 34, 35 enthält. Dabei sind die Elektroden auf der einen Seite als Kathode und auf der gegenüberliegenden Seite als Anode ausgebildet. Die Kathoden bestehen im Ausführungsbeispiel aus einer LaₓSr_{y}MnO₃ -Keramik. Die Anoden bestehen im Ausführungsbeispiel aus einem Nickeloxid- bzw. Nickel-Zirkonoxid-Cermet. Im Ausführungsbeispiel bestehen die Festelektrolytplatten 28 aus Yttrium stabilisiertem Zirkonoxid. Die mit dem Kathoden- und Anodenmaterial beschichteten Festelektrolyt-Platten 28 eines jeden Festelektrolyt-Elementes (26) sind in einem elektrisch isolierenden Rahmen 36 - im Ausführungsbeispiel aus Zirkonoxid -eingelegt, welcher mit den schlitzförmigen Durchbrüchen der bipolaren Platte 12 deckungsgleich angeordnete schlitzförmige Durchbrüche 38, 39, 40, 41, 42, 43, 44, 45 trägt. Dieser Rahmen wird beidseitig mit einem über der Betriebstemperatur schmelzenden Lot 50 auf die anliegenden Fensterfolien flächig aufgelötet. Sieht man einmal von dem unterschiedlichen Kathoden- und Anodenmaterial ab, so ist der geometrische Aufbau des Festelektrolyt-Elements auf seinen beiden Seiten identisch. Im Ausführungsbeispiel ist der Rahmen 36 nicht einstückig, sondern aus vier Dichtleisten 46, 47, 48, 49 aufgebaut. Der Rahmen besteht aus Zirkonoxid, das hinreichend temperaturfest und gasdicht ist und dessen elektrische Leitfähigkeit sehr gering ist.

Die Figur 6 zeigt eine Aufsicht auf eine Fensterfolie 52 des in der Figur 1 gezeigten Brennstoffzellenmoduls 1. Die Fensterfolie besteht im Ausführungsbeispiel aus dem gleichen Material wie die bipolare Platte 12. Sie hat die gleichen äußeren Abmessungen wie die bipolare Platte und trägt an ihren Rändern schlitzförmige Durchbrüche 54, 55, 56, 57, 58, 59, 60, 61, die mit den schlitzförmigen Durchbrüchen der bipolaren Platte deckungsgleich angeordnet sind. Außerdem hat die Fensterfolie 52 vier Fensteröffnungen 62, 63, 64, 65, die in ihrer Lage so angeordnet sind, daß sie bei Auflage auf der bipolaren Platte über den Rillenfeldern 14, 15, 16, 17 zum Liegen kommen. Die Fensterdurchbrüche können wie beim linken unteren Fenster 63 ohne jeden Steg oder wie bei den anderen Fenstern 62, 64, 65 mit mehreren deckungsgleich zu den Rändern der Rillen 14, 15 der bipolaren Platte 12 verlaufenden Stegen 68 ausgeführt sein. Diese Stege 68 haben die Funktion, die Elektroden 30, 31, 32, 33, 34, 35 des Festelektrolyt-Elements 36 abzustützen und den Strom abzuführen.

Beim Betrieb des Festelektrolyt-Hochtemperatur-Brennstoffzellenmoduls 1 wird der Brennstoff durch die an einer Seite des Stapels in den beiden bipolaren Deckplatten 2, 3 eingebrachten Durchgangslöcher 8, 9 eingespeist. Er strömt dann in die mit diesen Durchgangslöchern kommunizierenden schlitzförmigen Durchbrüche der beiden bipolaren Deckplatten und die deckungsgleich angeordneten schlitzförmigen Durchbrüche in den darunterliegenden Fensterfolien, Festelektrolyt-Elementen und bipolaren Platten durch den ganzen Stapel hindurch und durch die mit diesen schlitzförmigen Durchbrüchen in den einzelnen bipolaren Platten kommunizierenden Rillen der einzelnen Rillenfelder 14, 15 zu den schlitzförmigen Durchbrüchen 19, 21 auf der gegenüberliegenden Seite des Stapels und von dort wieder durch die Bohrungen 4, 5 in den beiden Deckplatten 2, 3 des Festelektrolyt-Hochtemperatur-Brennstoffzellenmoduls 1 wieder heraus. In gleicher Weise strömt der Sauerstoff, bzw. im Ausführungsbeispiel die Luft, durch die auf einer den Brennstoffzuführungen benachbarten Seite in den beiden bipolaren Deckplatten 2, 3 eingelassenen Bohrungen 6, 7 und die mit diesen kommunizierenden schlitzförmigen Durchbrüchen 22, 24 der beiden bipolaren Deckplatten in die deckungsgleich darunterliegenden schlitzförmigen Durchbrüche der Fensterfolien, Festelektrolyt-Elementen und bipolaren Platten usw. durch den ganzen Stapel hindurch und von den schlitzförmigen Durchbrüchen der bipolaren Platten 12 in den dazu kommunizierenden Rillen der einzelnen Rillenfelder 16, 17 zu den gegenüberliegenden schlitzförmigen Durchbrüchen 23, 25 und von dort aus wiederum durch die mit diesen kommunizierenden Durchgangslöcher 10, 11 in den beiden bipolaren Deckplatten 2, 3 heraus. Dabei ist das Festelektrolyt-Element so orientiert, daß seine Kathodenseite den Sauerstoff führenden Rillenfeldern der benachbarten bipolaren Platte und seine Anodenseite den Brennstoff führenden Rillenfeldern der anderen, benachbarten bipolaren Platte zugewandt ist. Weil die Strömungsrichtung des Brennstoffs in den Rillen einer jeden bipolaren Platte senkrecht zu denen der Luft ausgerichtet ist, spricht man vom Kreuzstromprinzip.

Beim Durchströmen der Rillenfelder befindet sich der Sauerstoff in direktem Kontakt mit den Kathoden der einzelnen Festelektrolyt-Elemente. An der Phasengrenze Kathode-Festelektrolyt werden die O₂-Moleküle aus der Luft unter Elektronenaufnahme in O²⁻-Ionen umgewandelt. Als O²⁻-Ionen können sie über Sauerstoffleerstellen durch den Zirkonoxid-Festelektrolyten wandern. Dabei gelangen sie schließlich zur Anode, wo sie an der Phasengrenze Anode-Festelektrolyt unter Abgabe von Elektronen mit dem Brenngas zu Kohlendioxid und Wasserdampf reagieren. Das sich bei der Oxidation des Brenngases bildende Kohlendioxid und Wasserdampfgemisch wird dann zusammen mit dem Brenngas wieder abgezogen. Dabei kann der Brennstoff extern in hier nicht weiter dargestellter Weise von den Verbrennungsprodukten CO₂ und H₂O getrennt und wieder in die Brennstoffzuführungsleitung eingespeist werden. Die an der Anode und Kathode sich bildenden Potentialunterschiede sind durch die jeweiligen gut leitenden Fensterfolien 52 und bipolaren Platten 12 untereinander in Serie geschaltet. Die Summe der in Serie geschalteten Potentiale der einzelnen Brennstoffzellen 1 können an den bipolaren Deckplatten abgegriffen werden.

Die Fensterfolien 52 dichten die bipolaren Platten gegenüber den Festelektrolyt-Elementen 26 ab. Sie sorgen zugleich für einen guten elektrischen Kontakt zwischen dem flächig aufgelöteten Festelektrolyt-Element 26 und der an der Fensterfolie 52 angeschweißten bipolaren Platte 12. Die bei der herrschenden hohen Betriebstemperatur gut isolierenden Dichtleisten 46 bis 49 aus Zirkonoxid verhindern einen Elektronen-Kurzschluß zwischen den Anoden- und Kathodenoberflächen der Festelektrolyt-Elemente. Die Stege in den Fensterfolien haben die Funktion einer Flächenabstützung der auf den Festelektrolytplatten 28 aufgebrachten Elektroden 30 bis 35 und vergrößern die Kontaktflächen.

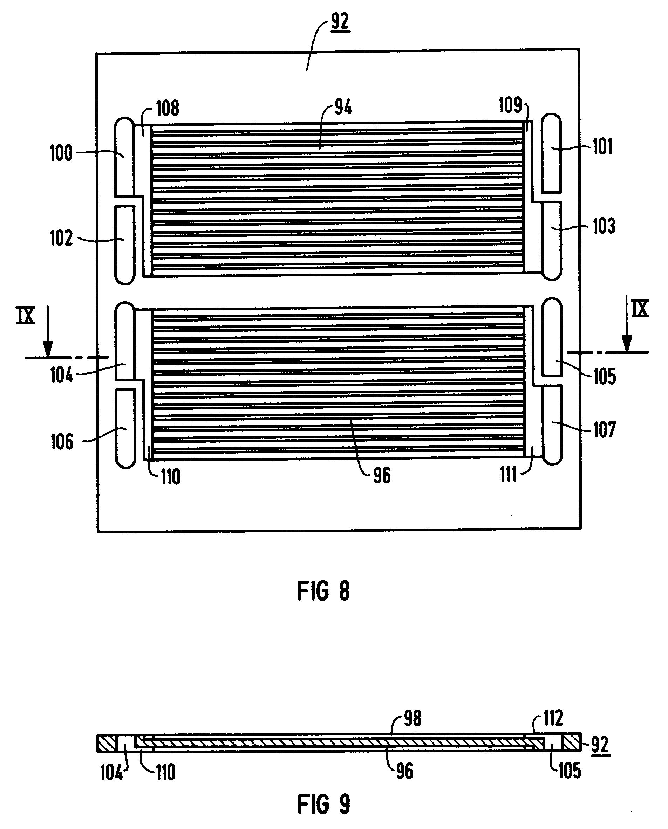

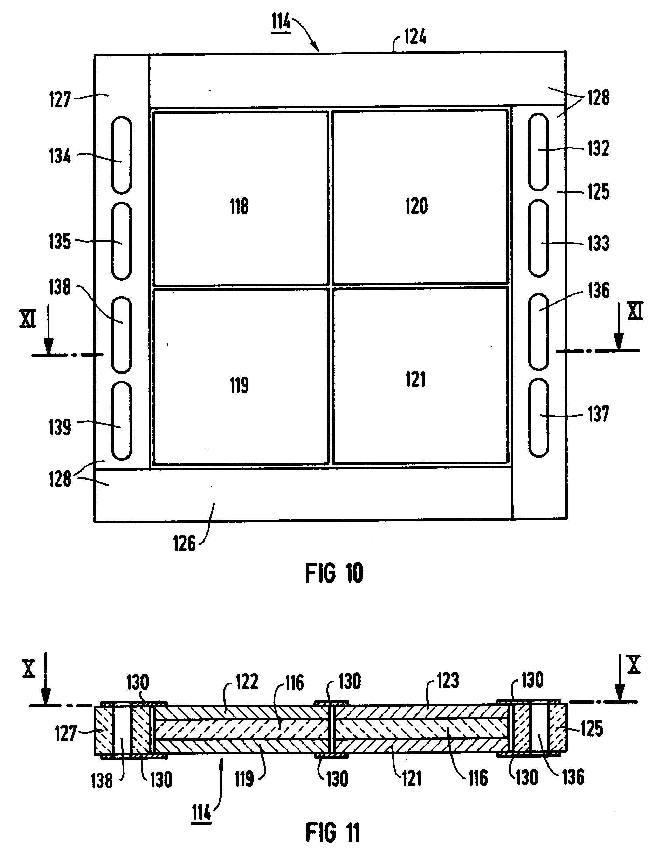

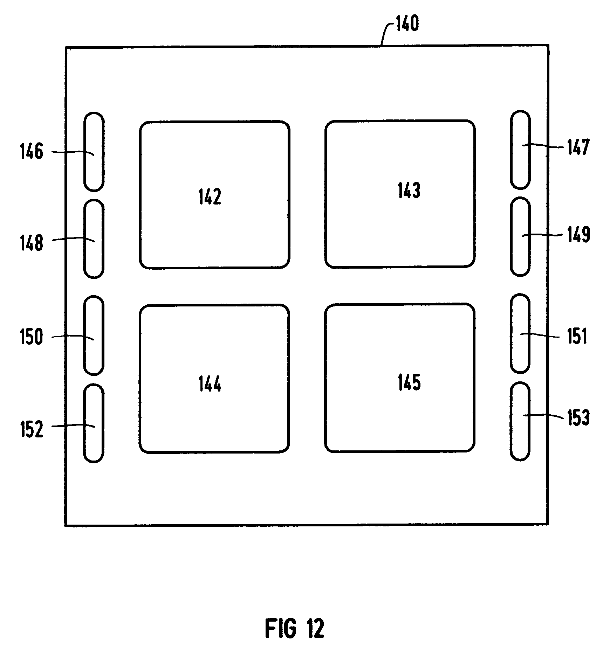

Die Figur 7 zeigt eine schaubildliche Ansicht eines nach dem Parallelstrom arbeitenden Festelektrolyt-Hochtemperatur-Brennstoffzellenmoduls 70. Man erkennt in der Figur, daß dieses Brennstoffzellenmodul ebenso wie jenes der Figur 1 aus einer Vielzahl von rechteckigen, im Ausführungsbeispiel quadratischen, plattenförmigen Elementen besteht, die aufeinandergestapelt sind und deren oberste und unterste Platte - je eine sogenannte bipolare Deckplatte 72, 74 - im Randbereich 16 kreisrunde Durchgangslöcher 76 bis 91 für die Einspeisung des Brennstoffs bzw. Brenngases und der Luft bzw. des Sauerstoffes trägt. Im Unterschied zum Ausführungsbeispiel der Figur 1 liegen bei diesem nach dem Parallelstrom arbeitenden Brennstoffzellenmodul sämtliche Durchgangslöcher an zwei einander gegenüberliegenden Seiten der beiden Deckplatten 72, 74. Dabei befinden sich die Durchgangslöcher auf der oberen und unteren bipolaren Deckplatte deckungsgleich übereinander. Auch bei diesem Festelektrolyt-Hochtemperatur-Brennstoffzellenmodul 70 liegen unter der oberen bipolaren Deckplatte der Reihenfolge nach eine in der Figur 12 dargestellte Fensterfolie, ein in den Figuren 10 und 11 dargestelltes Festelektrolyt-Element, eine weitere Fensterfolie, eine in den Figuren 8 und 9 dargestellte bipolare Platte, eine weitere Fensterfolie, ein weiteres Festelektrolyt-Element, eine weitere Fensterfolie, eine weitere bipolare Platte usw. aufeinander. Auch hier bilden jeweils die zwischen zwei benachbarten bipolaren Platten liegenden beiden Fensterfolien mit dem zwischenliegenden Festelektrolyt-Element und den an den Fensterfolien anliegenden Seiten der beiden benachbarten bipolaren Platten zusammen eine Festelektrolyt-Hochtemperatur-Brennstoffzelle.

Die Figur 8 zeigt in einer Aufsicht den Aufbau einer nach dem Parallelstromprinzip aufgebauten bipolaren Platte 92. Diese ist ebenso wie die bipolare Platte 12 der Figuren 2 und 3 einteilig ausgeführt und besteht aus einem der für die bipolare Platte 12 genannten Werkstoffe. Diese bipolare Platte 92 trägt auf jeder ihrer beiden Seiten zwei zueinander parallele Rillenfelder 94, 96, 98, welche mit Ausnahme eines Randbereichs nahezu die gesamte Fläche der bipolaren Platte überdecken. Im Unterschied zur bipolaren Platte der Figuren 2 und 3 sind jedoch die Rillenfelder 94, 96, 98 auf beiden Seiten dieser bipolaren Platte 92 deckungsgleich übereinander angeordnet. Außerdem befinden sich im Randbereich der bipolaren Platte gegenüber den Enden der Rillen eines jeden Rillenfeldes zwei schlitzförmige Durchbrüche 100 bis 107. Die Rillen der Rillenfelder 94, 96, 98 kommunizieren an ihren beiden Enden mit je einer Ausfräsung 108 bis 112 in der bipolaren Platte 92, die ihrerseits wiederum mit zwei diagonal zueinander stehenden schlitzförmigen Durchbrüchen kommunizieren. Dabei kommunizieren, wie die Schnittdarstellung der Figur 9 zeigt, die Rillenfelder der einen Seite der bipolaren Platte 92 mit jeweils einem anderen schlitzförmigen Durchbruch als die Rillenfelder auf der hierzu gegenüberliegenden Seite der bipolaren Platte.

Ähnlich wie beim Ausführungsbeispiel der Figur 1 dargestellt, unterscheiden sich die oberste und unterste bipolare Deckplatte 72, 74 des Festelektrolyt-Hochtemperatur-Brennstoffzellenmoduls 70 der Figur 7 von der in der Figur 8 und 9 dargestellten bipolaren Deckplatte nur dadurch, daß sie nur auf der dem Stapel zugewandten inneren Seite Rillenfelder und Einfräsungen tragen, nicht aber auf der anderen Seite. Außerdem sind die vier schlitzförmigen Durchbrüche nicht als Durchbrüche, sondern als Einsenkungen ausgeführt und lediglich an ihren beiden Enden jeweils mit zwei Durchgangslöchern 76 bis 91 versehen.

Die Figur 10 zeigt eine Aufsicht auf ein Festelektrolyt-Element 114, das mit Ausnahme seines Randbereiches identisch aufgebaut ist wie das Festelektrolyt-Element 26, das in den Figuren 4 und 5 beschrieben ist. Das heißt, das Festelektrolyt-Element 114 enthält vier auf der einen Seite mit Kathoden- und auf der anderen Seite mit Anodenmaterial beschichtete Festelektrolytplatten 116. Auch hier sind die aus Yttrium stabilisiertem Zirkonoxid bestehenden Festelektrolyt-Platten von einem aus vier Dichtleisten 124 bis 127 aufgebauten Rahmen 128 umgeben, der aus einer Zirkonoxid-Keramik besteht. Die einzelnen Dichtleisten des Rahmens 128 sind mit den Fensterfolien mit einem oberhalb der Betriebstemperatur von 1100 °C schmelzenden Lot 130 verlötet. Der Rahmen könnte aber auch aus einem Glas mit angepaßtem Ausdehnungskoeffizienten bestehen. Im Unterschied zum Festelektrolyt-Element der Figuren 4 und 5 tragen jedoch nur zwei einander gegenüberliegende Dichtleisten 125, 127 schlitzförmige Durchbrüche 132 bis 138, die deckungsgleich zu den schlitzförmigen Durchbrüchen 100 bis 107 der bipolaren Platte 92 angeordnet sind.

Die Figur 12 zeigt eine Aufsicht auf eine Fensterfolie 140, die im Ausführungsbeispiel aus dem gleichen Material wie die bipolare Platte 92 besteht. Diese Fensterfolie trägt, ähnlich wie die Fensterfolie 52 der Figur 6, vier Fensterdurchbrüche 142 bis 145, welche wahlweise, ebenso wie anhand der Figur 6 erläutert wurde, auch Stege tragen können. Außerdem trägt die Fensterfolie 140 an zwei einander gegenüberliegenden Seiten schlitzförmige Durchbrüche 146 bis 153, die wiederum deckungsgleich mit den schlitzförmigen Durchbrüchen 132 bis 139 im Festelektrolyt-Element 114 angeordnet sind.

Beim Betrieb des Festelektrolyt-Hochtemperatur-Brennstoffzellenmoduls 70 wird der Brennstoff durch die jeweils mit den Rillenfeldern 94 bis 98 der einen Seite der bipolaren Platte 92 kommunizierenden Bohrungen 84, 85, 88, 89 eingeleitet und wird der Sauerstoff bzw. die Luft durch die Bohrungen 76, 77, 80, 81 der jeweils mit den Rillenfeldern der hierzu gegenüberliegenden Seite der bipolaren Platte 92 kommunizierenden schlitzförmigen Durchbrüche eingeleitet. Dabei strömt der Brennstoff bzw. der Sauerstoff durch die deckungsgleich übereinanderliegenden schlitzförmigen Durchbrüche 100 bis 107 der bipolaren Platten 92, der Fensterfolien 140 und der Festelektrolyt-Elemente 114 durch den ganzen Stapel hindurch und strömt mit den mit den jeweiligen Durchbrüchen kommunizierenden Ausfräsungen in den Oberflächen der bipolaren Platten in das jeweils zugeordnete Rillenfeld hinein und auf der gegenüberliegenden Seite über ebensolche Ausfräsungen in die diagonal dazu angeordneten schlitzförmigen Durchbrüche und von dort wieder durch die mit diesen Durchbrüchen kommunizierenden Bohrungen aus den Deckplatten 72, 74 wieder heraus. Dabei wird jede Seite der bipolaren Platte entweder nur mit Brennstoff oder nur mit Sauerstoff beaufschlagt.

Die Festelektrolyt-Elemente 114 sind zwischen Fensterfolien 140 so zu den ihnen benachbarten bipolaren Platten 92 orientiert, daß sich der durch die Rillenfelder strömende Sauerstoff in direktem Kontakt mit den Kathodenoberflächen und der durch die Rillen strömende Brennstoff in direktem Kontakt mit den Anodenoberflächen der Festelektrolyt-Platten befindet. Dabei werden bei der herrschenden Betriebstemperatur von 800° bis 1100 °C O₂-Moleküle aus der Luft unter Elektronenaufnahme in O²⁻-Ionen umgewandelt. Als O₂⁻-Ionen können sie dann über Sauerstoffleerstellen durch den Zirkonoxid-Festelektrolyten wandern. Dabei gelangen sie zur Anode, wobei sie an der Phasengrenze Anode-Festelektrolyt unter Abgabe von Elektronen mit dem Brenngas zu Kohlendioxid und Wasserdampf reagieren. Das sich bei der Oxidation des Brenngases bildende Kohlendioxid- und Wasserdampfgemisch wird dann mit dem Brennstoff wieder aus den entsprechenden Bohrungen der beiden Deckplatten ausgetragen. Die sich an der Anode und Kathode bildenden Potentialunterschiede werden durch die jeweiligen gut leitenden Fensterfolien und bipolaren Platten untereinander in Serie geschaltet. Die Summe der in Serie geschalteten Potentiale der einzelnen Zellen kann dann an den beiden äußeren Deckplatten abgegriffen werden. Die Fensterfolien 140 haben hier die gleichen Aufgaben, wie das anhand des Ausführungsbeispiels der Figuren 1 bis 6 erläutert wurde. Abgesehen von den unterschiedlichen Strömungswegen für Gas- bzw. Brennstoff und Sauerstoff bzw. Luft, ist auch die Funktion der nach dem Kreuzstromprinzip und der nach dem Parallelstromprinzip aufgebauten Festelektrolyt-Hochtemperatur-Brennstoffzellenmodule 1 und 70 gleich.

Es wäre denkbar, daß man in den Rillen zur besseren Verwirbelung der Gasströme kleine Querrillen einbringt, oder geringfügige Unebenheiten vorsieht. Des weiteren wäre es denkbar, wenn auch wesentlich aufwendiger, die Rillen auf der mit Sauerstoff beaufschlagten Seite konisch auszubilden. Diese Maßnahme erlaubt es, auf der Brenngasseite die allmähliche Verdünnung mit Verbrennungsprodukten durch Verringerung der Geschwindigkeit zu kompensieren. Sie erlaubt es auch, die Kühlung ortsabhängig zu beeinflussen. Es ist auch denkbar, die Strömungsrichtung in benachbarten Rillenfeldern einer jeden Seite der bipolaren Platte gegenläufig anzuordnen.

Durch die Verwendung einer CrNi-Legierung mit einem Nickelgehalt von 5 bis 15 Gew.-% Nickel und Seltenen Erdenmetallen als Spurenelemente oder vorzugsweise einer FeCrAl-Legierung mit Gehalten von 5 bis 15 Gew.-% Mo und/oder 5 bis 15 Gew.-% W für die Fensterfolien und/oder bipolare Platten wird ein Material verwendet, das bei guter elektrischer Leitfähigkeit den gleichen thermischen Ausdehnungskoeffizienten aufweist wie die aus Yttrium stabilisiertem Zirkonoxid bestehenden Festelektrolyt-Platten, so daß bei Temperaturänderungen keine mechanischen Spannungen auf die Festelektrolyt-Platten übertragen werden können. Dabei verbessern die Seltenen Erdenelemente die Korrosionsbeständigkeit der CrNi-Legierung.

## Patentansprüche

1. Festelektrolyt-Hochtemperatur-Brennstoffzellenmodul (1,70) mit mehreren in Serie geschalteten, planen, fest aufeinanderliegenden Festelektrolyt-Hochtemperatur-Brennstoffzellen, wobei zwischen unmittelbar benachbarten, in Serie geschalteten Zellen je eine, die Kathode der einen Zelle mit der Anode der dieser benachbarten Zelle elektrisch leitend verbindende, die Gasverteilung mittels beidseitig eingelassener offener Kanäle (14 bis 17, 94, 96, 98) sicherstellende und ein tragendes Strukturelement darstellende bipolare Platte (12, 92) eingebaut ist, welche im Randbereich Durchbrüche (100 bis 107), die entweder mit den Kanälen der einen Seite oder mit den Kanälen der anderen Seite der bipolaren Platte kommunizieren, enthält und wobei zwischen den einander benachbarten bipolaren Platten je ein Festelektrolyt-Element (26, 114) eingelegt ist, welches auf der einen Seite mit Kathodenmaterial und auf der anderen Seite mit Anodenmaterial beschichtet ist, und im Randbereich eigene mit den Durchbrüchen der bipolaren Platte deckungsgleiche Durchbrüche (38 bis 45, 132 bis 139) aufweist, **dadurch gekennzeichnet,** daß die Festelektrolyt-Elemente (26, 114) an den Rändern Dichtflächen haben und an diesen Dichtflächen beidseitig der Festelektrolyt-Elemente (26, 114), zwischen diesen und den bipolaren Platten (12, 92) als weitere Dichtflächen sogenannte Fensterfolien (52, 140) aus elektrisch gut leitendem Material eingesetzt sind, welche im Randbereich mit den Durchbrüchen der bipolaren Platten deckungsgleiche eigene Durchbrüche (54 bis 61, 146 bis 153) und gegenüber den Kanälen der bipolaren Platten Fensterdurchbrüche (62 bis 65, 142 bis 145) aufweisen.

2. Festelektrolyt-Hochtemperatur-Brennstoffzellenmodul nach Anspruch 1, **dadurch gekennzeich****net,** daß die über den Kanälen (14 bis 17, 94, 96, 98) der bipolaren Platte (12, 92) befindlichen Fensterdurchbrüche (62, 64. 65) der Fensterfolie (52) Stützstege (68) tragen.

3. Festelektrolyt-Hochtemperatur-Brennstoffzellenmodul nach Anspruch 1 oder 2, **dadurch gekenn****zeichnet,** daß die Fensterfolie (52, 104) auf der anliegenden bipolaren Platte (12, 92) aufgeschweißt ist.

4. Festeleketrolyt-Hochtemperatur-Brennstoffzellenmodul nach Anspruch 3, **dadurch gekennzeichnet,** daß die Fensterfolie (52, 140) und die jeweils unmittelbar anliegende bipolare Platte (12, 92) um die Durchbrüche herum und an ihrem äußeren Umfang gasdicht miteinander verschweißt sind.

5. Festelektrolyt-Hochtemperatur-Brennstoffzellenmodul nach einem der Ansprüche 1 bis 4, **dadurch ge****kennzeichnet,** daß die Festelektrolyt-Elemente (26, 114) nur im Bereich jener den Fensterdurchbrüchen (62 bis 65, 142 bis 145) in der Fensterfolie (52, 140) gegenüberliegenden Flächenelementen mit Kathoden- bzw. mit Anodenmaterial beschichtet sind.

6. Festelektrolyt-Hochtemperatur-Brennstoffzellenmodul nach einem der Ansprüche 1 bis 5, **dadurch ge****kennzeichnet,** daß in einem Festelektrolyt-Element (26, 114) nebeneinander mehrere separate, auf der einen Seite mit Kathodenmaterial und auf der anderen Seite mit Anodenmaterial beschichtete Festelektrolytplatten (28, 116) angeordnet sind.

7. Festelektrolyt-Hochtemperatur-Brennstoffzellenmodul nach einem der Ansprüche 1 bis 6, **dadurch ge****kennzeichnet,** daß die Festelektrolyt-Elemente (26, 114) von einem umlaufenden Rahmen (36, 128) aus einem elektrisch nicht leitenden Material umschlossen sind.

8. Festelektrolyt-Hochtemperatur-Brennstoffzellenmodul nach Anspruch 7, **dadurch gekennzeich****net,** daß der Rahmen (36, 128) mit den Durchbrüchen der bipolaren Platte (12, 92) deckungsgleiche eigene Durchbrüche (38 bis 45, 132 bis 139) trägt.

9. Festelektrolyt-Hochtemperatur-Brennstoffzellenmodul nach Anspruch 7 oder 8, **dadurch gekenn****zeichnet,** daß der Rahmen (36, 128) aus Zirkonoxid besteht.

10. Festelektrolyt-Hochtemperatur-Brennstoffzellenmodul nach Anspruch 7 oder 8, **dadurch gekenn****zeichnet,** daß der Rahmen (36, 128) aus einem speziellen, mit seinem Ausdehnungskoeffizienten an die bipolare Platte (12, 92) angepaßten Glas besteht.

11. Festelektrolyt-Hochtemperatur-Brennstoffzellenmodul nach einem der Ansprüche 7 bis 10, **dadurch ge****kennzeichnet,** daß der Rahmen der Festelektrolyt-Elemente einstückig ausgebildet ist.

12. Festelektrolyt-Hochtemperatur-Brennstoffzellenmodul nach einem der Ansprüche 7 bis 10, **dadurch ge****kennzeichnet,** daß die Rahmen (36, 128) der Festelektrolyt-Elemente (26, 114) aus vier Stücken (46 bis 49, 124 bis 127) besteht.

13. Festelektrolyt-Hochtemperatur-Brennstoffzellenmodul nach einem der Ansprüche 7 bis 12, **dadurch ge****kennzeichnet,** daß der Rahmen (36, 128) mit der Fensterfolie (52, 140) verlötet ist.

14. Festelektrolyt-Hochtemperatur-Brennstoffzellenmodul nach einem der Ansprüche 1 bis 13, **dadurch ge****kennzeichnet,** daß die Kanäle (14 bis 17) an den beiden Seiten der bipolaren Platte (12) rechtwinklig zueinander ausgerichtet sind.

15. Festelektrolyt-Hochtemperatur-Brennstoffzellenmodul nach einem der Ansprüche 1 bis 13, **dadurch ge****kennzeichnet,** daß die Kanäle (94, 96, 98) auf den beiden Seite der bipolaren Platte (92) parallel zueinander ausgerichtet sind.

16. Festelektrolyt-Hochtemperatur-Brennstoffzellenmodul nach einem der Ansprüche 1 bis 13 und 15, **dadurch** **gekennzeichnet,** daß sich in der bipolaren Platten (92) bei beidseitig zueinander parallel ausgerichteten Kanälen (94, 96, 98) mindestens je zwei Durchbrüche (100 bis 107) auf jeder Seite der Kanäle befinden, von denen jeweils nur mindestens einer mit einer Seite der Kanäle kommuniziert.

17. Festelektrolyt-Hochtemperatur-Brennstoffzellenmodul nach einem der Ansprüche 1 bis 16, **dadurch ge****gekennzeichnet,** daß sich die Kanäle auf beiden Seiten der bipolaren Platte in Strömungsrichtung der Gase verjüngen.

18. Festelektrolyt-Hochtemperatur-Brennstoffzellenmodul nach einem oder mehreren der Ansprüche 1 bis 17, **dadurch gekennzeichnet,** daß die Kanäle die bipolare Platte mit Rillen zur Gasverwirbelung ausgerüstet sind.

19. Festelektrolyt-Hochtemperatur-Brennstoffzellenmodul nach einem der Ansprüche 1 bis 18, **dadurch ge****kennzeichnet,** daß die Kanäle (94, 96, 98) an ihren beiden Enden mit mindestens einem der Durchbrüche (100 bis 107) im Randbereich der bipolaren Platte (92) kommunizieren.

20. Festelektrolyt-Hochtemperatur-Brennstoffzellenmodul nach einem Ansprüche 1 bis 19, **dadurch ge****kennzeichnet,** daß die bipolare Platte (12, 92) aus einer metallisch leitenden Legierung gefertigt ist, deren thermischer Ausdehnungskoeffizient mit demjenigen des Festelektrolyt-Elements (26, 114) übereinstimmt.

21. Festelektrolyt-Hochtemperatur-Brennstoffzellenmodul nach einem der Ansprüche 1 bis 20, **dadurch ge****kennzeichnet,** daß die Fensterfolien (52, 140) aus einem elektrisch gut leitendem Material mit einem thermischen Ausdehnungskoeffizient gefertigt sind, der mit dem thermischen Ausdehnungskoeffizienten der Festelektrolyt-Elemente übereinstimmt.

22. Festelektrolyt-Hochtemperatur-Brennstoffzellenmodul nach Anspruch 1 bis 21, **dadurch gekenn****zeichnet,** daß die bipolaren Platten (12, 92) und/oder die Fensterfolien (52, 140) bei der Verwendung von Zirkonoxid für die Festelektrolyt-Platten (28, 116) und Rahmen (36, 128) der Festelektrolyt-Elemente (26, 114) aus einer Chrom-Nickel-Legierung mit Nickelgehalten von 5 bis 15 Gew.-% gefertigt sind.

23. Festelektrolyt-Hochtemperatur-Brennstoffzellenmodul nach Anspruch 22, **dadurch gekennzeich****net,** daß der Chrom-Nickel-Legierung Seltene Erdenmetalle als Spurenelemente beigemischt sind.

24. Festelektrolyt-Hochtemperatur-Brennstoffzellenmodul nach Anspruch 1 bis 21, **dadurch gekenn****kennzeichnet,** daß die bipolaren Platten (12, 92) und/oder die Fensterfolien (52, 140) bei Verwendung von Zirkonoxid für die Festelektrolyt-Platten (28, 116) und Rahmen (36, 128) der Festelektrolyt-Elemente (26, 114) aus einer Eisen-Chrom-Aluminium-Legierung mit Gehalten von 5 bis 15 Gew.-% Molybdän und/oder 5 bis 15 Gew.-% Wolfram gefertigt sind.

## Claims

1. A solid electrolyte high-temperature fuel cell module (1, 70) with a plurality of flat, fixedly superimposed solid electrolyte high-temperature fuel cells connected in series, wherein a bipolar plate (12, 92), which acts as a supporting structure element, which ensures gas distribution by means of open ducts (14 to 17, 94, 96, 98) provided on both sides and which electrically conductively connects the cathode of one cell with the anode of the adjacent cell, is fitted in each case between directly adjacent cells connected in series and in its edge region comprises apertures (100 to 107), which either communicate with the ducts on one side or with the ducts on the other side of the bipolar plate, and wherein a solid electrolyte element (26, 114) is fitted in each case between adjacent bipolar plates, which solid electrolyte element is coated on one side with cathode material and on the other side with anode material and in its edge region comprises its own apertures (38 to 45, 132 to 139) congruent with the apertures in the bipolar plate, characterised in that the solid electrolyte elements (26, 114) have sealing surfaces at their edges and so-called window films (52, 140) mmde of highly electrically conductive material are fitted as further sealing surfaces on the first sealing surfaces on either side of the solid electrolyte elements (26, 114), between these and the bipolar plates (12, 92), and which window films in their edge region comprise their own apertures (54 to 61, 146 to 153) congruent with the apertures in the bipolar plates and window apertures (62 to 65, 142 to 145) opposite the ducts in the bipolar plates.

2. A solid electrolyte high-temperature fuel cell module according to claim 1, characterised in that the window apertures (62, 64, 65) of the window film (52) arranged over the ducts (14 to 17, 94, 96, 98) of the bipolar plate (12, 92) have support webs (68).

3. A solid electrolyte high-temperature fuel cell module according to claim 1 or 2, characterised in that the window film (52, 104) is welded onto the adjoining bipolar plate (12, 92).

4. A solid electrolyte high-temperature fuel cell module according to claim 3, characterised in that the window film (52, 140) and its respective directly adjoining bipolar plate (12, 92) are welded together in a gastight manner around the apertures and around their outer circumference.

5. A solid electrolyte high-temperature fuel cell module according to one of claims 1 to 4, characterised in that the solid electrolyte element (28, 114) is only coated with cathode or anode material in the region of tbose surface elements lying opposite the window apertures (62 to 65, 142 to 145) in the window film (52, 140).

6. A solid electrolyte high-temperature fuel cell module according to one of claims 1 to 5, characterised in that a plurality of separate solid electrolyte plates (28, 116) coated on one side with cathode material and on the other side with anode material are arranged adjacent to one another in a solid electrolyte element (26, 114).

7. A solid electrolyte high-temperature fuel cell module according to one of claims 1 to 6, characterised in that the solid electrolyte element (26, 114) is enclosed by a circumferential frame (36, 128) made of an electrically non-conductive material.

8. A solid electrolyte high-temperature fuel cell module according to claim 7, characterised in that the frame (36, 128) comprises its own apertures (38 to 45, 132 to 139) congruent with the apertures of the bipolar plate (12, 92).

9. A solid electrolyte high-temperature fuel cell module according to claim 7 or 8, characterised in that the frame (36, 128) is made of zirconium oxide.

10. A solid electrolyte high-temperature fuel cell module according to claim 7 or 8, characterised in that the frame (36, 128) is made of a special glass whose coefficients of expansion are adapted to the bipolar plate (12, 92).

11. A solid electrolyte high-temperature fuel cell module according to one of claims 7 to 10, characterised in that the frame of the solid electrolyte element is integrally formed.

12. A solid electrolyte high-temperature fuel cell module according to one of claims 7 to 10, characterised in that the frame (36, 128) of the solid electrolyte element (26, 114) is made of four parts (46 to 49, 124 to 127).

13. A solid electrolyte high-temperature fuel cell module according to one of claims 7 to 12, characterised in that the frame (36, 128) is soldered to the window film (52, 140).

14. A solid electrolyte high-temperature fuel cell module according to one of claims 1 to 13, characterised in that the ducts (14 to 17) on either side of the bipolar plate (12) are arranged at right angles to one another.

15. A solid electrolyte high-temperature fuel cell module according to one of claims 1 to 13, characterised in that the ducts (94, 96, 98) on either side of the bipolar plate (12) are arranged parallel to one another.

16. A solid electrolyte high-temperature fuel cell module according to one of claims 1 to 13 and 15, characterised in that, in the bipolar plates (92) with ducts (94, 96, 98) arranged parallel to one another on either side, at least two apertures (100 to 107) are provided on either side of the ducts, only one of the apertures communicating with one side of the ducts in each case.

17. A solid electrolyte high-temperature fuel cell module according to one of claims 1 to 16, characterised in that the ducts on either side of the bipolar plate taper in the direction of the gasflow.

18. A solid electrolyte high-temperature fuel cell module according to one or more of claims 1 to 17, characterised in that the ducts of the bipolar plate are provided with grooves for creating gas turbulence.

19. A solid electrolyte high-temperature fuel cell module according to one of claims 1 to 18, characterised in that the ducts (94, 96, 98) communicate at both ends with at least one of the apertures (100 to 107) in the edge region of the bipolar plate (92).

20. A solid electrolyte high-temperature fuel cell module according to one of claims 1 to 19, characterised in that the bipolar plate (12, 92) is manufactured from a metallically conductive alloy, whose thermal coefficient of expansion corresponds to that of the solid electrolyte element (26, 114).

21. A solid electrolyte high-temperature fuel cell module according to one of claims 1 to 20, characterised in that the window films (52, 140) are manufactured from a highly electrically conductive material with a thermal coefficient of expansion corresponding to the thermal coefficient of expansion of the solid electrolyte elements.

22. A solid electrolyte high-temperature fuel cell module according to claims 1 to 21, characterised in that, where zirconium oxide is used for the solid electrolyte plates (28, 116) and the frame (36, 128) of the solid electrolyte elements (26, 114), the bipolar plates (12, 92) and/or the window films (52, 140) are manufactured from a chromium-nickel alloy with a nickel content of 5 to 15% by weight.

23. A solid electrolyte high-temperature fuel cell module according to claim 22, characterised in that rare earth metals are mixed with the chromium-nickel alloy as trace elements.

24. A solid electrolyte high-temperature fuel cell module according to claims 1 to 21, characterised in that, where zirconium oxide is used for the solid electrolyte plates (28, 116) and the frame (36, 128) of the solid electrolyte elements (26, 114), the bipolar plates (12, 92) and/or the window films (52, 140) are manufactured from an iron-chromium-aluminium alloy with a molybdenum content of 5 to 15% by weight and/or a tungsten content of 5 to 15% by weight.

## Revendications

1. Module de piles à combustible à électrolyte solide et fonctionnant à haute température (1, 70), comportant plusieurs piles à combustible, à électrolyte solide et fonctionnant à haute température qui sont planes, solidement appliquées l'une contre l'autre et connectées en série, dans lequel est monté, entre des piles directement adjacentes et connectées en série, une plaque bipolaire (12, 92), reliant de façon électriquement conductrice la cathode d'une pile avec l'anode de la pile adjacente à celle-ci, ladite plaque bipolaire (12, 92) assurant la répartition de gaz au moyen de canaux ouverts (14 à 17, 94, 96, 98) encastrés des deux côtés, représentant un élément structural de support et comportant dans une zone périphérique des passages (100 à 107) qui communiquent soit avec les canaux situés d'un côté de la plaque bipolaire soit avec les canaux situés de l'autre côté, et dans lequel est logé entre des plaques bipolaires mutuellement adjacentes un élément en électrolyte solide (26, 114), qui est revêtu d'un côté par de la matière de cathode et de l'autre côté par de la matière d'anode, et qui comporte, dans une zone périphérique ses propres passages (38 à 45, 132 à 139) disposés en coïncidence de recouvrement avec les passages de la plaque bipolaire, caractérisé en ce que les éléments en électrolyte solide (26, 114) ont sur les bords des surface d'étanchéité et il est prévu sur ces surfaces d'étanchéité, des deux côtés des éléments en électrolyte solide (26, 114), entre ceux-ci et les plaques bipolaires (12, 92), comme surfaces d'étanchéité supplémentaires, ce qu'on appelle des feuilles à fenêtres (52, 140) constituées d'un matériau électriquement bon conducteur et qui comportent, dans la zone périphérique, leurs propres passages (54 à 61, 146 à 153), qui coïncident en recouvrement avec les passages des plaques bipolaires, et en face des canaux des plaques bipolaires, des passages fenêtres (62 à 65, 142 à 145).

2. Module de piles à combustible à électrolyte solide et fonctionnant à haute température selon la revendication 1, caractérisé en ce que les passages-fenêtres (62, 64, 65) de la feuille à fenêtres (52) situés au-dessus des canaux (14 à 17, 94, 96, 98) de la plaque bipolaire (12, 92) comportent des barrettes de soutien (68).

3. Module de piles à combustible à électrolyte solide et fonctionnant à haute température selon la revendication 1 ou 2, caractérisé en ce que la feuille à fenêtres (52, 104) est soudée sur la plaque bipolaire adjacente (12, 92).

4. Module de piles à combustible à électrolyte solide et fonctionnant à haute température selon la revendication 3, caractérisé en ce que la feuille à fenêtres (52, 140) et la plaque bipolaire (12, 92) respective directement adjacentes sont soudées l'une avec l'autre de façon étanche au gaz autour des passages et sur leur pourtour extérieur.

5. Module de piles à combustible à électrolyte solide et fonctionnant à haute température selon l'une des revendications 1 à 4, caractérisé en ce que les éléments en électrolyte solide (26, 114) sont recouverts de matière de cathode ou de matière d'anode seulement dans la zone des parties de surface, situées en regard des passages-fenêtres (62 à 65, 142 à 145) prévus dans la feuille à fenêtres (52, 140).

6. Module de piles à combustible à électrolyte solide et fonctionnant à haute température selon l'une des revendications 1 à 5, caractérisée en ce qu'il est prévu dans un élément en électrolyte solide (26, 114), plusieurs plaques en électrolyte solide séparées (28, 116), disposées l'une à côté de l'autre et recouvertes d'un côté de matière de cathode et de l'autre côté de matière d'anode.

7. Module de piles à combustible à électrolyte solide et fonctionnant à haute température selon l'une des revendications 1 à 6, caractérisé en ce que les éléments en électrolyte solide (26, 114) sont entourés par un encadrement périphérique (36, 128) constitué d'une matière électriquement non conductrice.

8. Module de piles à combustible à électrolyte solide et fonctionnant à haute température selon la revendication 7, caractérisé en ce que l'encadrement (36, 128) comporte des passages (38 à 45, 132 à 139) recouvrant en coïncidence les passages de la plaque bipolaire (12, 92).

9. Module de piles à combustible à électrolyte solide et fonctionnant à haute température selon la revendication 7 ou 8, caractérisé en ce que l'encadrement (36, 128) est formé d'oxyde de zirconium.

10. Module de piles à combustible à électrolyte solide et fonctionnant à haute température selon la revendication 7 ou 8, caractérisé en ce que l'encadrement (36, 128) se compose d'un verre spécial dont le coefficient de dilatation est adapté à la plaque bipolaire (12, 92).

11. Module de piles à combustible à électrolyte solide et fonctionnant à haute température selon l'une des revendications 7 à 10, caractérisé en ce que l'encadrement est formé unitairement avec les éléments en électrolyte solide.

12. Module de piles à combustible à électrolyte solide et fonctionnant à haute température selon l'une des revendications 7 à 10, caractérisé en ce que l'encadrement (36, 108) des éléments en électrolyte solide (26, 114) se compose de parties (46 à 49, 124 à 127).

13. Module de piles à combustible à électrolyte solide et fonctionnant à haute température selon l'une des revendications 7 à 12, caractérisé en ce que l'encadrement (36, 128) est relié par brasage avec la feuille à fenêtres (52, 140).

14. Module de piles à combustible à électrolyte solide et fonctionnant à haute température selon l'une des revendications 1 à 13, caractérisé en ce que les canaux (14 à 17) prévus des deux côtés de la plaque bipolaire (12) sont orientés mutuellement perpendiculairement.

15. Module de piles à combustible à électrolyte solide et fonctionnant à haute température selon l'une des revendications 1 à 13, caractérisé en ce que les canaux (94, 96, 98) prévus sur les deux côtés de la plaque bipolaire (92) sont orientés mutuellement parallèlement.

16. Module de piles à combustible à électrolyte solide et fonctionnant à haute température selon une des revendications 1 à 13 et 15, caractérisé en ce qu'il est prévu dans les plaques bipolaires (92), dans des canaux (94, 96, 98) orientés mutuellement parallèlement sur les deux côtés, au moins deux passages (100 à 107) de chaque côté des canaux et parmi lesquels seulement au moins un communique avec un côté des canaux.

17. Module de piles à combustible à électrolyte solide et fonctionnant à haute température selon l'une des revendications 1 à 16, caractérisé en ce que les canaux prévus sur les deux côtés de la plaque bipolaire diminuent de section dans la direction d'écoulement des gaz.

18. Module de piles à combustible à électrolyte solide et fonctionnant à haute température selon ou plusieurs des revendications 1 à 17, caractérisé en ce que les canaux des plaques bipolaires sont pourvus de rainures pour une mise en turbulence des gaz.

19. Module de piles à combustible à électrolyte solide et fonctionnant à haute température selon l'une des revendications 1 à 18, caractérisé en ce que les canaux (94, 96, 98) communiquent à leurs deux extrémités avec au moins un des passages (100 à 107) prévus dans la zone de bord de la plaque bipolaire (92).

20. Module de piles à combustible à électrolyte solide et fonctionnant à haute température selon l'une des revendications 1 à 19, caractérisé en ce que la plaque bipolaire (12, 92) est fabriquée en un alliage métalliquement conducteur, dont le coefficient de dilatation thermique correspond à celui de l'élément en électrolyte solide (26, 114).

21. Module de piles à combustible à électrolyte solide et fonctionnant à haute température selon une des revendications 1 à 20, caractérisé en ce que les feuilles à fenêtres (52, 140) sont fabriquées en un matériau électriquement bon conducteur et ayant un coefficient de dilatation thermique qui correspond au coefficient de dilatation thermique des éléments en électrolyte solide.

22. Module de piles à combustible à électrolyte solide et fonctionnant à haute température selon les revendications 1 à 21, caractérisé en ce que les plaques bipolaires (12, 92) et/ou les feuilles à fenêtres (52, 140) sont fabriquées, lorsqu'on utilise de l'oxyde de zirconium pour les plaques d'électrolyte solide (28, 116) et pour les encadrements (36, 128) des éléments en électrolyte solide (26, 114), en un alliage chrome-nickel ayant une teneur en nickel de 5 à 15% en poids.

23. Module de piles à combustible à électrolyte solide et fonctionnant à haute température selon la revendication 22, caractérisé en ce que des métaux de terres rares sont mélangés comme éléments de traces à l'alliage chrome-nickel.

24. Module de piles à combustible à électrolyte solide et fonctionnant à haute température selon les revendications 1 à 21, caractérisé en ce que les plaques bipolaires (12, 92) et/ou les feuilles à fenêtres (52, 140) sont fabriqués, lorsqu'on utilise de l'oxyde de zirconium pour les plaques en électrolyte solide (28, 116) et les encadrements (36, 128) des éléments en électrolyte solide (26, 114), en un alliage fer-chrome-aluminium ayant une teneur en molybdène de 5 à 15% en poids et/ou une teneur en tungstène de 5 à 15% en poids.
